# EUROPÄISCHE PATENTSCHRIFT

(11) **EP 0 997 512 B1**
(45) Veröffentlichungstag und Bekanntmachung des Hinweises auf die Patenterteilung: **07.01.2004**
(21) Anmeldenummer: 99119899.5
(22) Anmeldetag: 07.10.1999
(51) Int. Cl.: C09J 7/00, C09J 7/02, A47G 1/17

(54) **Klebestreifen**
Adhesive Tape
Ruban adhésif

(30) Priorität: 26.10.1998 DE 19849199
(43) Veröffentlichungstag der Anmeldung: 03.05.2000
(73) Patentinhaber: Tesa AG, 20253 Hamburg (DE)
(72) Erfinder: Stubbe, Andreas, 25551 Hohenlockstedt (DE); Lechte, Harald, Dr., 22846 Norderstedt (DE)

(56) Entgegenhaltungen:
- EP-A- 0 845 513
- DE-A- 19 537 323
- DE-A- 19 708 364
- US-A- 5 507 464

## Beschreibung

Die Erfindung betrifft einen Klebestreifen für rückstandsfrei und zerstörungsfrei wiederlösbare Verklebungen durch Ziehen/Verstrecken in der Verklebungsebene sowie mit diesem Klebestreifen verklebte oder verklebbare Haken und Basisplatten.

Hochdehnbare elastisch oder plastisch unter Verstreckung deformierende, einseitig oder beidseitig haftklebrige Selbstklebebänder (Klebstoff-Folien), die durch Ziehen im wesentlichen in Richtung ihrer Verklebungsebene rückstands- und zerstörungsfrei wiederablösbar sind, sind bekannt. Mit ihnen hergestellte Verklebungen bieten kraftvollen Halt und lassen sich doch spurlos wiederablösen, sei es mit nur geringer Beschädigung des Untergrundes oder der Fügeteile oder gar ohne.
Beispielhafte Klebebänder vorgenannter Art sind in US 4,024,312, DE 33 31 016, DE 42 22 849, WO 92/11332, WO 92/11333, US 5,516,581 und WO 95/06691 beschrieben.

Eine häufige Konfektionierform entsprechender Produkte sind Selbstklebebandzuschnitte, zum Beispiel in Form rechteckiger Streifen, welche an einem Ende einen klebfreien Anfasserbereich besitzen (siehe DE 42 22 849, WO 92/11333 beziehungsweise US 5,516,581). Der Anfasser dient als Grifffläche für ein späteres Wiederablösen des Klebebandes. Im Handel sind solche Produkte unter der Bezeichnung "tesa Power-Strips" ® erhältlich.

Praktische Probleme mit o. g. Produkten treten dann auf, wenn im Falle von doppelseitig haftklebrigen Selbstklebebändern das Selbstklebeband beim Ablöseprozeß reißt. Dieser Problematik nehmen sich insbesondere DE 42 22 849, DE 44 28 587 und DE 44 31 914 an. In der DE 42 22 849 beschriebene Klebebänder nutzen UV-undurchlässsige Anfasserabdeckungen, welche die Reißerneigung im Anfasserbereich nach UV-Exposition reduzieren beziehungsweise verhindern sollen. In der DE 44 28 578 beschriebene Klebebänder verfügen über ein besonders ausgeformtes Ende, welches einem partiellen Reißen des Klebebandes zum Ende des Ablöseprozesses entgegenwirkt. DE 44 31 914 beschreibt Klebebänder, welche im Anfasserbereich u. a. spezielle Folien- oder Papierabdeckungen aufweisen, die eine geringe Adhäsion zur verwendeten Selbstklebemasse besitzen, wodurch die Reißerneigung im Bereich des klebfreien Anfassers reduziert wird. Eine allgemeine Lösung der Reißerproblematik steht dennoch aus.

Mit der DE 37 14 453 C1 wird eine Möglichkeit offenbart, einen Übungssprengkörper an einem Untergrund zu befestigen, indem dieser mittels eines doppelseitigen Klebebands verklebt wird, wobei zwischen Klebeband und Übungssprengkörper ein Stripband angeordnet ist. Zur Lösung der Verklebung wird an einem an dem Stripband vorhandenen Anfasser gezogen. Eine Beschichtung des Anfasser ist nicht vorhanden, der Anfasser steht frei heraus.

Ein bevorzugtes Anwendungsgebiet von durch Verstrecken im wesentlichen in der Verklebungsebene rückstands- und zerstörungsfrei wiederablösbaren Selbstklebebändem ist die Verklebung von Haken oder vergleichbaren Vorrichtungen, wie sie u. a. aus der DE 42 33 872 bekannt sind. In dieser wird ein Haken beschrieben, der mittels eines Streifens einer Klebfolie auf dem Untergrund verklebt wird, wobei der Klebfolienstreifen einen nichtklebenden Anfasser aufweist. Um den Haken wieder vom Untergrund zu lösen, wird der Klebfolienstreifen in der Verklebungsebene am Anfasser durch Zug gestreckt, worauf es zur Entklebung kommt. Damit der Haken wieder vom Untergrund gelöst werden kann, ist es zwingend notwendig, daß der Klebfolienstreifen so unter dem Haken verklebt wird, daß der Anfasser sichtbar und vor allem greifbar ist.
Dieser stets sichtbare Anfasser trübt naturgemäß den optischen Eindruck des verklebten Hakens, beinhaltet aber auch technische Nachteile, denn der Anfasser ist äußeren Belastungen schutzlos ausgeliefert. Erhöhte UV-Strahlung oder auch Lösungsmittel führen zu einer Beeinträchtigung der Stabilität des Anfassers, mitunter kann dieser dann beim Ablösen unter der Zugeinwirkung ab reißen. Eine Trennung des Hakens vom Untergrund ist dann nur noch unter Zerstörung des Untergrunds oder des Hakens möglich.
Solche Haken sind bereits im Handel erhältlich, und zwar unter dem Namen "tesa Power-Strips mit Haken"®.

Einen vergleichbaren Haken offenbart die PCT-Anmeldung WO 94/21157. Der in dieser gezeigte Haken verwendet eine Klebfolie, die hochelastisch und des weiteren nicht rückstellend ist.

Weiterhin sind im Handel die sogenannten "tesa Power-Strips Systemhaken" ® erhältlich. Zum Anbringen dieser auf dem Untergrund wird zunächst eine Basisplatte mittels eines Streifens der erwähnten Klebfolie verklebt, wobei wieder der Anfasser sichtbar bleiben muß. Auf die Basisplatte wird dann der jeweilige Haken aufgesteckt.

Die in den vorgenannten Druckschriften dargestellten Klebsysteme und Haken weisen eine Anzahl von Nachteilen auf.

Problematisch ist bei Haken und dergleichen des Standes der Technik, wie bereits oben erwähnt, die optische Abdeckung des Anfassers, der zum späteren Ziehen die Vorrichtung überragen muß, und zwar zum Schutz dieses Anfassers vor Manipulation oder Beschädigung, insbesondere Schaden durch UV-Licht.
Um die erwünschte und teilweise erforderliche Abdeckung des Anfassers zu gewährleisten zu können, müssen die mit dem Klebfolienstreifen zu verklebenden Gegenstände eine Tragfläche aufweisen, die den gesamten Klebfolienstreifen, also inklusive des überstehenden Anfassers abdeckt.

Noch deutlicher tritt das Problem bei den Systemen mit den Basisplatten auf. Mittels des Klebestreifens wird die Basisplatte auf dem Untergrund fixiert, und zwar derart, daß die Basisplatte den klebenden Bereich des Klebestreifens abdeckt und gleichzeitig der nichtklebende Anfasser frei hervorsteht. Auf die Basisplatte wird -vergleichbar einem Adaptersystem- ein Körper aufgesteckt, der einen Haken, Deckenhaken oder eine sonstige Befestigungsvorrichtung trägt. Dieser Körper muß nun wieder die Basisplatte mitsamt des freien Anfassers bedecken, um neben der Erfüllung der genannten technischen Anforderungen einen optisch einwandfreien Eindruck zu erzielen.
Der Körper bedeckt eine relativ große Fläche des Untergrunds, muß also selbst eine gewisse Größe aufweisen. Diese bauliche Größe wird oft als unschön empfunden. Des weiteren ist sie technisch eigentlich nicht erforderlich, weil die Fläche, die die Verklebung der Basisplatte sichert, viel kleiner ist. Eigentlich muß lediglich die Basisplatte abgedeckt werden, wenn der Anfasser nicht vonnöten wäre.
Hier will die Erfindung ansetzen.

Aufgabe der vorliegenden Erfindung ist es, die vorgenannten Nachteile zu überwinden, also eine Möglichkeit zu bieten, die bisher erforderlichen großen Abdeckungen für die mittels der Klebestreifen verklebten Haken beziehungsweise für die mittels der Klebestreifen verklebten Basisplatten zu verringern.

Gelöst wird diese Aufgabe durch Klebestreifen, wie sie näher in den Ansprüchen gekennzeichnet sind. Gegenstand der Unteransprüche sind vorteilhafte Ausführungsformen der Klebestreifen sowie Haken und Basisplatten, die mit diesen verklebbar sind sowie mit diesen verklebt worden sind.

Demgemäß betrifft die Erfindung einen Klebestreifen mit klebendem Bereich und Anfasser für eine rückstandsfrei und zerstörungsfrei wiederlösbare Verklebung, wobei der Klebestreifen ein solcher ist, der durch ZiehenNerstrecken in der Verklebungsebene lösbar ist, wobei der Anfasser, an dem durch Ziehen/Verstrecken in der Verklebungsebene die Verklebung wieder lösbar ist, in Richtung des klebenden Bereiches des Klebestreifens umgelegt ist oder vorzugsweise umgelegt und reversibel fixiert ist.

Bevorzugt besteht der Klebestreifen aus einem hochverstreckbaren, elastisch oder plastisch unter Dehnung verformbaren Material, gegebenenfalls mit einem Zwischenträger, insbesondere mit einem Folien- oder Schaumstoff-Zwischenträger.
Die Adhäsion der Klebfolie sollte geringer sein als die Kohäsion, das Haftvermögen beim Dehnen der Folie weitgehend verschwinden und das Verhältnis von Abzugskraft zu Reißlast mindestens 1 : 1,5 sein.
Vorzugsweise ist der Klebestreifen ein solcher auf Basis von thermoplastischem Kautschuk und klebrigmachenden Harzen mit hoher Elastizität und geringer Plastizität.
Die Klebestreifen können einseitig oder beidseitig haftklebrig oder auch einseitig oder beidseitig mit einer thermisch aktivierbaren Klebmasse ausgerüstet sein. Ihr Aufbau kann einschichtig oder mehrschichtig ausgeführt sein. Im Falle beidseitig haftklebriger Selbstklebebänder können als Zwischenträger elastisch oder plastisch deformierende Materialien genutzt werden. Hierin eingeschlossen sind neben Kunststoffolien insbesondere Klebmassen als Zwischenschichten und schaumstoffhaltige Zwischenträger. In einer bevorzugten Ausführungsform weist die Klebfolie einen Zwischenträger auf, der beidseitig mit einer Acrylatkleberbeschichtung versehen ist. Erfindungsgemäße Klebestreifen werden demgemäß durch selektive Beschichtung geeigneter nicht haftklebriger Trägermaterialien erhalten.
In diesem Fall werden die Anfasserbereiche durch den genutzten Träger gestellt, welcher derart partiell mit Klebmasse beschichtet oder bedruckt wird, daß die Anfasserbereiche nicht mit Klebstoff bedeckt sind.

Erfindungsgemäße Klebestreifen werden in konfektionierter Form, etwa in Form von Stanzlingen oder Zuschnitten eingesetzt. Konfektionierte Ware weist einen zentralen haftklebrigen Bereich auf. An diesen angrenzend finden sich mehrere, jedoch wenigstens ein Anfasserbereich.

Konfektionierformen umfassen neben Klebebandstücken definierter Abmessungen, zum Beispiel in Form von Stanzlingen oder Zuschnitten, wie zuvor beschrieben, gleichfalls Klebebandrollen, bei denen erst der Nutzer den endgültigen Zuschnitt des zu verwendenden Selbstklebebandes durch zum Beispiel Zuschneiden vornimmt. Beispiel für eine entsprechende Klebebandrolle ist die eines mit zum Beispiel einem Trennpapier abgedeckten doppelseitig haftklebrigen Klebebandes, dessen Klebmassenoberfläche in beiden Kantenbereichen beidseitig durch zum Beispiel Auflegen einer dünnen Polyesterfolie inertisiert wurde.

Erfindungsgemäße Klebebänder lassen sich ausgehend von ein- oder beidseitig haftklebrigen Selbstklebebänder, welche durch Verstrecken im wesentlichen in Richtung der Verklebungsebene rückstands- und zerstörungsfrei wiederablösbar sind, durch partielle Inertisierung der Haftkleberoberfläche selbiger Klebebänder erhalten.

Die Inertisierung der Klebmasseoberfläche zur Bildung des Anfassers kann durch Abdeckung durch zum Beispiel dünne Folien aus zum Beispiel Kunststoff oder durch Abdeckung mit dünnen Papieren vorgenommen werden. Alternativ kann eine Beschichtung oder Bedruckung der zu inertisierenden Haftklebmassebereiche mittels eines nicht klebrigen Lacks oder eines nichtklebrigen pulverförmigen Materials durchgeführt werden. Bevorzugterweise wird die Inertisierung entsprechend DE 44 31 914 realisiert.
Die Inertisierung kann dabei so durchgeführt werden, daß der Klebestreifen im Bereich des gewünschten Anfassers im Vergleich zur Klebkraft des Klebestreifens nur eine geringe Klebkraft aufweist. Dies ist möglich durch eine gezielt partielle Bedruckung oder Beschichtung.

Bevorzugt wird die Inertisierung der Klebmassenoberfläche bzw. die Beschichtung eines geeigneten Trägers mit Haftklebemasse bei beidseitig haftklebrigen Klebstoff-Folien näherungsweise deckungsgleich auf beiden Seiten durchgeführt.

Insbesondere bei Klebfolien mit Zwischenträger, der beidseitig mit einer Klebebeschichtung versehen ist, kann das erfindungsgemäß vorgeschlagene Umlegen des Anfassers erfolgen, indem der Anfasser umgeknickt wird, gegebenenfalls unter Zuhilfenahme von Werkzeug wie beispielsweise einer Zange, so daß sich eine bleibende Verformung einstellt. Eine weitergehende Fixierung ist hier nicht notwendig.

Die unbeschichteten Anfasserbereiche werden in einer weiteren bevorzugten Ausführungsform erfindungsgemäß zumindest einseitig vollflächig oder partiell mit einer haftklebenden Beschichtung ausgerüstet, also einer Beschichtung, die im Vergleich zum eigentlichen Kleber eine geringere Haftkraft aufweist, beziehungsweise mit dem Kleber, wie er zur Beschichtung des Zwischenträgers genutzt wird.
Der Auftrag kann in Form von einem oder mehreren Punkten oder sonstig geformten Varianten erfolgen, die gegebenenfalls mit einem Schutzpapier abgedeckt sind.

Insbesondere wenn der Klebestreifen ein solcher auf Basis von thermoplastischem Kautschuk und klebrigmachenden Harzen ist mit hoher Elastizität und geringer Plastizität und demgemäß keinen Zwischenträger aufweist, wird der Anfasser dadurch gebildet, daß der Klebestreifen an einem Ende oder an beiden Enden beiderseits mit Abdeckungen versehen ist, die als Anfasser dienen.
Als besonders vorteilhaft hat sich herausgestellt, wenn zumindest eine der genannten Abdeckungen wenigstens einen Durchbruch aufweist. Beim Umlegen des Anfassers, zum Beispiel nachdem eine Basisplatte mit diesem verklebt worden ist, verklebt der freiliegende Klebstreifenkleber mit der Basisplatte. Aufgrund der relativ geringen Fläche ist die Klebkraft allerdings so gering, daß der Anfasser problemlos wieder aufgenommen werden kann.

Weiter vorzugsweise Falle ist zumindest eine der Abdeckungen mit dem Haftkleber ausgerüstet, sei es vollflächig, sei es partiell.
In einer weiteren bevorzugten Ausführungsform sind der oder die klebend ausgerüsteten Seiten des Anfassers mit einer abhäsiv ausgerüsteten Abdeckung versehen.
Auch hier hat es sich vorteilhaft herausgestellt, wenn zumindest eine der genannten Abdeckungen wenigstens einen Durchbruch aufweist. Denn so kann der Anfasser einfach umgelegt werden, ohne daß die Abdeckung zuvor entfernt werden muß.

Die erwähnten Durchbrüche geben den Zugang zu einer offenen Fläche Klebmasse frei, die eine gewisse Klebkraft erzeugt. Gegebenenfalls ist diese ebenfalls mit einer Abdeckung ausgerüstet. Allerdings können die Anfasser auch auf die Abdeckung der eigentlichen Klebestreifen zurückgefaltet werden, so daß man zum einen eine Abdeckung einspart, zum anderen auch gleich die zum Abverkauf des Klebestreifens erforderliche Umverpackung verringert.

In einer weiteren bevorzugten Ausführungsform sind an dem Klebestreifen mehrere Anfasser vorhanden, die je nach Anforderung alle oder nur einzeln haftklebend ausgerüstet sein können.

Schließlich umfaßt die Erfindung einen Haken sowie eine Basisplatte, die mit dem erfindungsgemäßen Klebestreifen, wie er in der obigen Beschreibung dargelegt worden ist, auf einem Untergrund verklebbar sind beziehungsweise verklebt sind.
Gerade die Basisplatte bietet eine hervorragende Möglichkeit, den Erfindungsgedanken weiter fortzuführen. Vom Schutzgedanken umfaßt ist eine Basisplatte, auf der der Klebestreifen bereits aufgeklebt ist, so daß auf eine Abdeckung des Klebestreifens verzichtet werden kann. Der erfindungsgemäß klebend ausgerüstete Anfasser kann umgelegt werden und auf der Basisplatte fixiert werden. Basisplatte und derartig befestigter Klebestreifen bilden eine Einheit, der sehr verpackungssparend und kundenfreundlich plaziert werden kann. Weiterhin ist diese Einheit problemlos auf einem Untergrund verklebbar, indem die zweite Seite des Klebestreifens von der Abdeckung befreit wird und die Einheit an der gewünschten Stelle verklebt wird.
Auch entsprechend mit einem Klebestreifen ausgerüstete Haken weisen die gleichen Vorteile auf.
Ein weiterer Vorteil des umgelegten Anfassers auf der Basisplatte besteht darin, daß, wenn auf die Basisplatte ein Haken aufgesetzt wird, ein Klemmeffekt des Hakens auf der Basisplatte zustande kommt, was das gelegentlich auftretende Klappern des Hakens auf der Basisplatte verhindert oder zumindest verringert.

Im folgenden soll die Erfindung anhand von Figuren und Ausführungsbeispielen erläutert werden, ohne diese dadurch aber unnötig einschränken zu wollen. Es zeigen

Es zeigen die
- Figur 1: einen erfindungsgemäß ausgerüsteten Klebestreifen mit einem klebenden Bereich und einem Anfasser,
- Figur 2: eine Basisplatte, die mit einem Klebestreifen versehen ist,
- Figur 3: den auf der Basisplatte verklebten Anfasser des Klebestreifens,
- Figur 4: einen erfindungsgemäß ausgerüsteten Klebestreifen mit einem klebenden Bereich und einem Anfasser, in dessen Abdeckungen jeweils ein Durchbruch vorhanden ist, und
- Figur 5: einen erfindungsgemäß ausgerüsteten Klebestreifen mit einem klebenden Bereich und einem Anfasser, der mit einem Klebepunkt ausgerüstet ist.

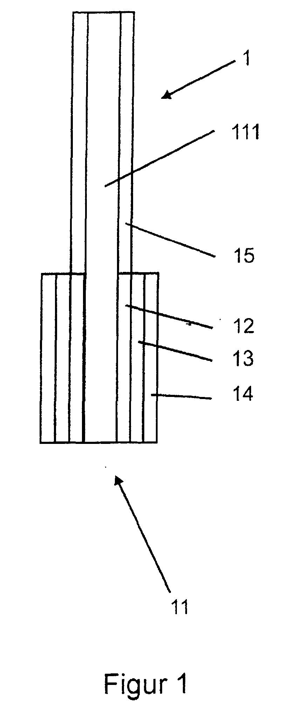

In der Figur 1 ist der erfindungsgemäß ausgerüstete Klebestreifen 1 gezeigt, der aus einem hochverstreckbaren, elastisch oder plastisch unter Dehnung verformbaren Material 111 besteht, das an dem durch Ziehen/Verstrecken in der Verklebungsebene wieder lösbar ist. Der Klebestreifen 111 ist an seinem einen Ende beidseitig mit einer Abdeckung 12 versehen, die den Anfasser 11 bilden, an dem gezogen wird, um den Klebestreifen 1 vom Untergrund zu entfernen. Des weiteren ist der Klebestreifen 1 beidseitig mit zusätzlichen Abdeckungen 15 versehen, die vor dem Verkleben des Klebestreifens 1 abzunehmen sind.

Auf den Abdeckungen 12 des Anfassers 11 sind leicht haftklebende Beschichtungen 13 aufgebracht, die ihrerseits wiederum mit einer Schutzfolie 14 bedeckt sind, um ein Verschmutzen der Klebebeschichtung 13 zu verhindern. Um den Anfasser nach dem Verkleben des Klebestreifens 1 ebenfalls zu befestigen, wird eine der Schutzfolien 14 abgenommen.

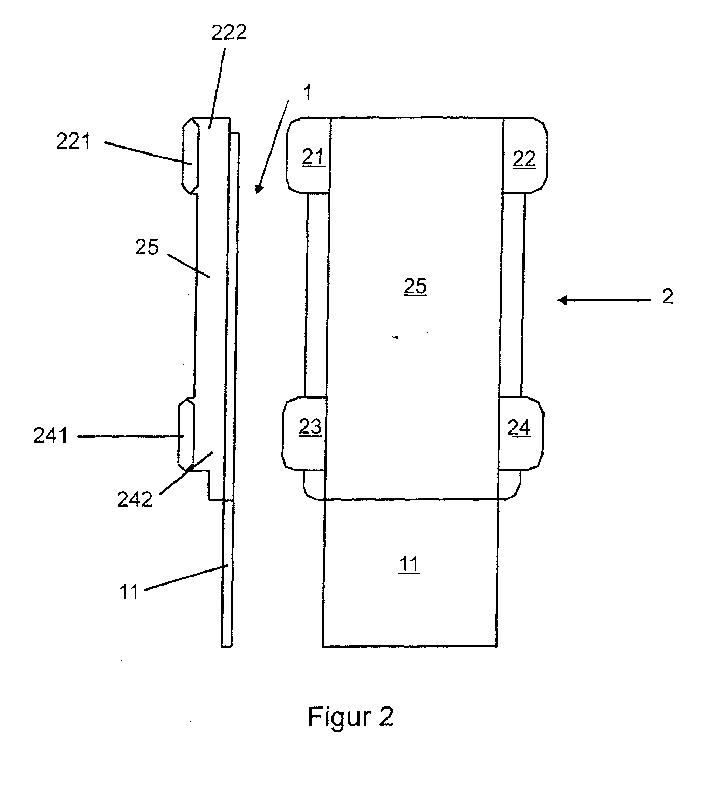

Die Figur 2 zeigt die mittels eines Klebestreifens 1 verklebte Basisplatte 2, wobei der überstehende Bereich des Klebstreifens 1, wie in Figur 1 gezeigt, zunächst nicht klebend durch Auflage einer Abdeckung und anschließend haftklebend ausgerüstet ist, also den Anfasser 11 für den Klebstreifen 1 bildet.
Die Basisplatte 2 besteht aus einem im wesentlichen rechteckig geformten Boden 25, an den an den Ecken insgesamt vier Ausweitungen 21, 22, 23, 24 angeformt sind. Jeweils zwei der Ausweitungen 21, 22, 23, 24 liegen sich gegenüber. Beispielhaft für die übrigen soll die Ausweitung 21 näher beschrieben werden. Die Ausweitung 21 besteht aus einer Deckplatte 221, die ebenfalls im wesentlichen rechteckig geformt ist. Die nach außen weisende Kante der Deckplatte 221 ist mit abgerundeten Ecken versehen. Die Verbindung zwischen Deckplatte 221 und Boden 25 erfolgt durch einen Träger 222, der zum einen im Eckbereich des Bodens 25 und zum anderen an der innen liegenden Kante der Deckplatte 221 ansetzt. Wie der seitlichen Ansicht zu entnehmen ist, weisen die Träger 222, 242 identische Höhen auf.

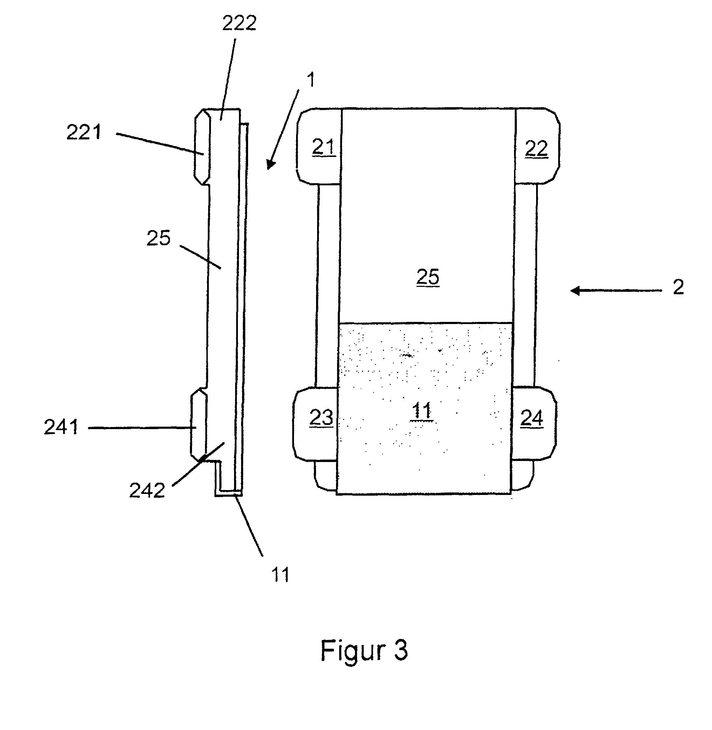

Die Figur 3 zeigt die mittels eines Klebestreifens 1 verklebte Basisplatte 2, wobei der Anfasser 11 auf der Basisplatte 2 verklebt ist. Vor der Verklebung können Klebestreifen 1 und Basisplatte 2 eine Einheit bilden, die derartig zum Verkauf angeboten wird.

Ein Hakenkörper, der nunmehr auf der Basisplatte 2 aufgebracht wird, muß in Figur 2 die Basisplatte 2 sowie den überstehenden Anfasser 11 bedecken. Mit der erfindungsgemäßen Ausrüstung des Klebstreifens 1 reduziert sich die zu bedeckende Fläche auf die Größe der Basisplatte 2.

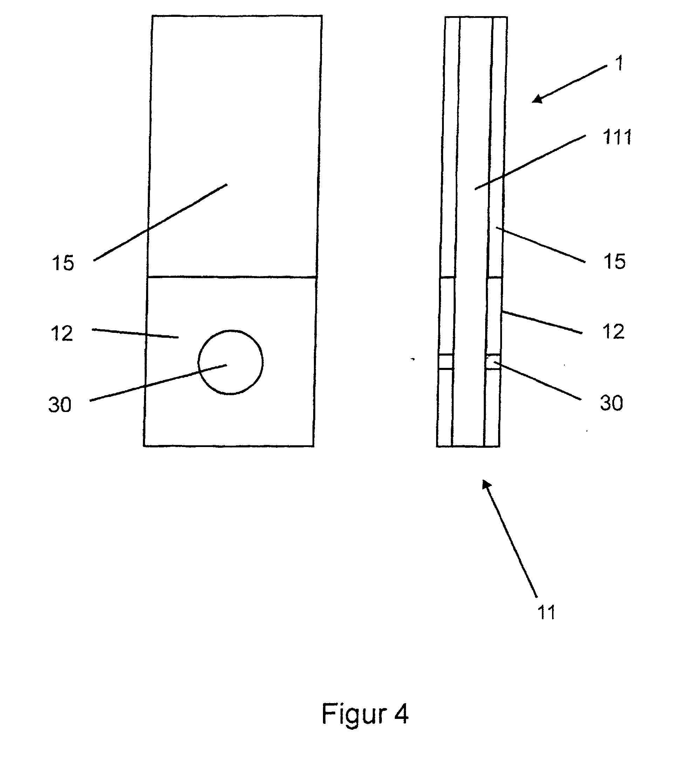

In der Figur 4 ist ein weiterer erfindungsgemäß ausgerüsteter Klebestreifen 1 gezeigt, der aus einem hochverstreckbaren, elastisch oder plastisch unter Dehnung verformbaren Material 111 besteht, das an dem durch Ziehen/Verstrecken in der Verklebungsebene wieder lösbar ist. Der Klebestreifen 111 ist an seinem einen Ende beidseitig mit einer Abdeckung 12 versehen, die den Anfasser 11 bilden, an dem gezogen wird, um den Klebestreifen 1 vom Untergrund zu entfernen. Des weiteren ist der Klebestreifen 1 beidseitig mit zusätzlichen Abdeckungen 15 versehen, die vor dem Verkleben des Klebestreifens 1 abzunehmen sind.

In den Abdeckungen 12 des Anfassers 11 sind ein oder mehrere Durchbrüche 30 vorhanden, die es ermöglichen, den Anfasser 11 nach dem Umlegungen mittels der Klebkraft des Klebstreifens 111 reversibel zu fixieren.

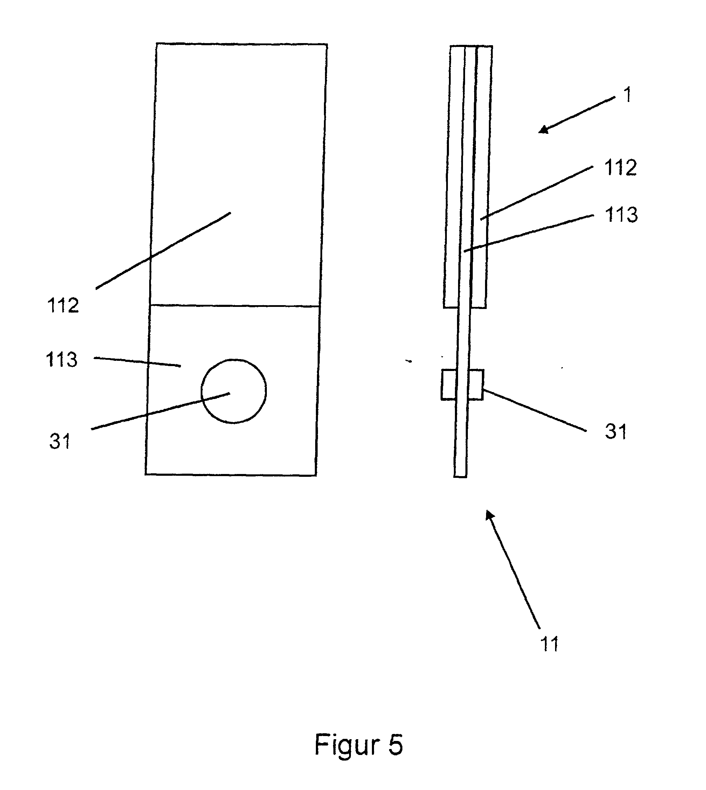

Mit der Figur 5 ist ein erfindungsgemäß ausgerüsteter Klebestreifen 1 gezeigt, der aus einer Folie 113 besteht, auf der beidseitig ein Kleber 112 aufgetragen ist, wobei die Folie 113 eine solche ist, die aus einem hochverstreckbaren, elastisch oder plastisch unter Dehnung verformbaren Material 111 besteht, das an dem durch Ziehen/Verstrecken in der Verklebungsebene wieder lösbar ist. Der Anfasser 11 weist eine klebende partielle Beschichtung 31 in Form eines oder mehrerer Klebepunkte auf, die dafür sorgt, daß der Anfasser 11 reversibel durch Umlegen fixiert werden kann.

### Beispiele

### Beispiel 1

Auf eine einschichtige Klebstoffolie der Abmessungen 70 mm x 15 mm x 1 mm (Länge x Breite x Dicke) auf Styrolblockcopolymerbasis (Rezeptur I), werden beidseitig, an beiden Längsenden, jeweils 12 µm starke einseitig silikonisierte Polyethylenterephthalatfolienstücke (Hostaphan RN 12) der Abmessungen 15 mm x 15 mm, mit der silikonisierten Seite zum Klebstoff gewandt, aufgelegt. Die haftklebrigen Mittelbereiche der so erhaltenen Klebstoff-Folien sind zum Schutz beidseitig mit silikonisiertem Trennpapier abgedeckt.

Die Polyethylenterephthalatfolienstücke (Hostaphan RN 12) werden mit einer handelsüblichen Haftklebemasse ausgerüstet, die eine geringe Haftkraft aufweist. Auf die Haftklebemasse werden abschließend Abschnitte aus silikonisiertem Trennpapier der Abmessung 15 mm x 15 mm aufgelegt.

### Rezeptur I

| | |
|---|---|
| 80 Tln. | Europrene Sol T 193B (EniChem) |
| 20 Tln. | Vector 4261 (Exxon Chemicals) |
| 100 Tln. | Foralyn 110 (Hercules) |
| 1 Tln. | Irganox 1010 (Ciba) |

### Beispiel 2

Entsprechend Beispiel 1 wird ein schaumstoffhaltiger Träger auf Basis eines Ethylen-Vinylacetatcopolymeren (Alveolit TEE 0500.8; Alveo AG; Raumdichte = 200 kg/m³; Dicke = 800 µm) beidseitig mit einer 250 µm dicken Klebstoffschicht der Rezeptur 1 zusammenkaschiert. Hierzu wird der gewählte Schaumstoff auf den auf silikonisiertem Trennpapier vorliegenden Haftklebstoff aufgelegt, danach mit einer gummibeschichteten Stahlwalze von 25 cm Breite bei einem Anpreßdruck von 50 N fünfmal überrollt. Das so erhaltene Zwischenprodukt wird in identischer Weise auf der zweiten Seite mit Haftklebstoff beschichtet. Danach werden analog zu Beispiel 1 Klebstoff-Folienzuschnitte erstellt, welche beidseitig endständig 15 mm x 15 mm abmessende einseitig silikonisierte Polyesterfolien als Anfasser tragen.

Die Polyesterfolien-Abschnitte werden gemäß Beispiel 1 mit einer handelsüblichen Haftklebemasse ausgerüstet, auf die abschließend Abschnitte aus silikonisiertem Trennpapier der Abmessung 15 mm x 15 mm aufgelegt werden.

## Patentansprüche

1. Klebestreifen mit klebendem Bereich und Anfasser für eine rückstandsfrei und zerstörungsfrei wiederlösbare Verklebung, wobei der Klebestreifen ein solcher ist, der durch ZiehenNerstrecken in der Verklebungsebene lösbar ist, **dadurch gekennzeichnet, dass** der Anfasser, an dem durch Ziehen/Verstrecken in der Verklebungsebene die Verklebung wieder lösbar ist, in Richtung des klebenden Bereiches des Klebestreifens umgelegt ist.

2. Klebestreifen nach Anspruch 1, **dadurch gekennzeichnet, dass** der Anfasser umgelegt und reversibel fixiert ist.

3. Klebestreifen nach Anspruch 1, **dadurch gekennzeichnet, dass** der Klebestreifen aus einem hochverstreckbaren, elastisch oder plastisch unter Dehnung verformbaren Material, ggf. mit einem Zwischenträger, insbesondere mit einem Folien- oder Schaumstoff-Zwischenträger besteht.

4. Klebestreifen nach Anspruch 1, **dadurch gekennzeichnet, dass** die Adhäsion der Klebfolie geringer ist als die Kohäsion, das Haftvermögen beim Dehnen der Folie weitgehend verschwindet, und das Verhältnis von Abzugskraft zu Reißlast mindestens 1 : 1,5 ist.

5. Klebestreifen nach Anspruch 1, **dadurch gekennzeichnet, dass** der Klebestreifen ein solcher auf Basis von thermoplastischem Kautschuk und klebrigmachenden Harzen ist, mit hoher Elastizität und geringer Plastizität.

6. Klebestreifen nach Anspruch 1, **dadurch gekennzeichnet, dass** der Klebestreifen einen Zwischenträger mit beidseitig aufgetragener Acrylatkleberbeschichtung aufweist.

7. Klebestreifen nach Anspruch 1, **dadurch gekennzeichnet, dass** der Klebestreifen an einem Ende oder an beiden Enden beiderseits durch eine Beschichtung oder Bedruckung inertisiert ist, so dass ein Anfasser gebildet wird, der eine geringe oder keine Haftkraft aufweist.

8. Klebestreifen nach Anspruch 1, **dadurch gekennzeichnet, dass** der Klebestreifen an einem Ende oder an beiden Enden beiderseits mit einer Abdeckung versehen ist, die zugleich als Anfasser dient.

9. Klebestreifen nach Anspruch 1, **dadurch gekennzeichnet, dass** der Anfasser zumindest einseitig vollflächig oder partiell haftklebend ausgerüstet ist

10. Klebestreifen nach Anspruch 9, **dadurch gekennzeichnet, dass** der oder die klebenden Seiten des Anfassers mit einer abhäsiv ausgerüsteten Abdeckung versehen sind.

11. Klebestreifen nach Anspruch 8 oder 10, **dadurch gekennzeichnet, dass** zumindest eine der Abdeckungen wenigstens einen Durchbruch aufweist.

12. Klebestreifen nach Anspruch 1, **dadurch gekennzeichnet, dass** an dem Klebestreifen mehrere Anfasser vorhanden sind.

13. Haken, versehen mit einem Klebestreifen nach mindestens einem der vorhergehenden Ansprüche.

14. Basisplatte, versehen mit einem Klebestreifen nach mindestens einem der vorhergehenden Ansprüche.

## Claims

1. Adhesive strip with an adhesive region and grip tab for a bond which can be parted again without residue or destruction, the adhesive strip being partable by pulling/stretching in the bond plane, **characterized in that** the grip tab at which the adhesive bond can be parted again by pulling/stretching in the bond plane is turned over in the direction of the adhesive region of the adhesive strip.

2. Adhesive strip according to Claim 1, **characterized in that** the grip tab is turned over and reversibly fixed.

3. Adhesive strip according to Claim 1, **characterized in that** the adhesive strip is composed of a highly stretchable material which can be deformed elastically or plastically under extension, where appropriate with an intermediate carrier, in particular an intermediate film or foam carrier.

4. Adhesive strip according to Claim 1, **characterized in that** the adhesion of the adhesive sheet is lower than the cohesion, the adhesive capacity largely disappears when the film is extended, and the ratio of peel force to tearing load is at least 1:1.5.

5. Adhesive strip according to Claim 1, **characterized in that** the adhesive strip is one based on thermoplastic rubber and tackifying resins, with high elasticity and low plasticity.

6. Adhesive strip according to Claim 1, **characterized in that** the adhesive strip comprises an intermediate carrier with acrylate adhesive coating applied on both sides.

7. Adhesive strip according to Claim 1, **characterized in that** the adhesive strip has been neutralized at one end or at both ends on both sides by a coating or by printing, so as to form a grip tab having little or no adhesive force.

8. Adhesive strip according to Claim 1, **characterized in that** the adhesive strip is provided at one end or at both ends on both sides with a cover which serves at the same time as grip tab.

9. Adhesive strip according to Claim 1, **characterized in that** the grip tab has been made pressure-sensitively adhering at least on one side, over the full area or partially.

10. Adhesive strip according to Claim 9, **characterized in that** the grip tab or the adhesive sides of the grip tab have been provided with an abhesive cover.

11. Adhesive strip according to Claim 8 or 10, **characterized in that** at least one of the covers has at least one perforation.

12. Adhesive strip according to Claim 1, **characterized in that** there are two or more grip tabs on the adhesive strip.

13. Hook provided with an adhesive strip according to at least one of the preceding claims.

14. Baseplate provided with an adhesive strip according to at least one of the preceding claims.

## Revendications

1. Languette adhésive avec une zone adhésive et une prise pour un collage pouvant être redétaché sans résidus et sans dégradations, la languette adhésive étant une languette qui peut être détachée par traction/étirement dans le plan de collage, **caractérisée en ce que** la prise, avec laquelle le collage peut être redétaché par traction/étirement dans le plan de collage, est rabattue dans le sens de la zone adhésive de la languette adhésive.

2. Languette adhésive selon la revendication 1, **caractérisée en ce que** la prise est rabattue et fixée de manière réversible.

3. Languette adhésive selon la revendication 1, **caractérisée en ce que** la languette adhésive est constituée d'un matériau hautement extensible, déformable élastiquement ou plastiquement avec une extension, le cas échéant avec un support intermédiaire, en particulier avec un support intermédiaire en forme de film ou de mousse.

4. Languette adhésive selon la revendication 1, **caractérisée en ce que** l'adhésion du film adhésif est plus faible que la cohésion, l'adhésivité disparaît dans une large mesure lors de l'extension du film et le rapport force d'enlèvement à charge de déchirement est d'au moins 1 : 1,5.

5. Languette adhésive selon la revendication 1, **caractérisée en ce que** la languette adhésive est une languette à base de caoutchouc thermoplastique et de résines adhésives, avec une élasticité élevée et une plasticité basse.

6. Languette adhésive selon la revendication 1, **caractérisée en ce que** la languette adhésive présente un support intermédiaire avec un revêtement adhésif d'acrylate appliqué des deux côtés.

7. Languette adhésive selon la revendication 1, **caractérisée en ce que** la languette adhésive a été rendue inerte en une extrémité ou sur les deux extrémités, des deux côtés, par un revêtement ou une impression de telle manière qu'une prise est formée, qui présente une adhésivité basse ou qui ne présente pas d'adhésivité.

8. Languette adhésive selon la revendication 1, **caractérisée en ce que** la languette adhésive est pourvue en-une extrémité ou aux deux extrémités, des deux côtés, d'un recouvrement, qui sert simultanément de prise.

9. Languette adhésive selon la revendication 1, **caractérisée en ce que** la prise est apprêtée de manière auto-adhésive au moins d'un côté, sur toute la surface ou partiellement.

10. Languette adhésive selon la revendication 9, **caractérisée en ce que** la ou les faces . adhésives de la prise sont pourvues d'un recouvrement apprêté de manière anti-adhésive.

11. Languette adhésive selon la revendication 8 ou 10, **caractérisée en ce qu'**au moins un des recouvrements présente au moins un trou.

12. Languette adhésive selon la revendication 1, **caractérisée en ce que** plusieurs prises sont présentes sur la languette adhésive.

13. Crochet, pourvu d'une languette adhésive selon au moins l'une quelconque des revendications précédentes.

14. Plaque de base, pourvue d'une languette adhésive selon au moins l'une quelconque des revendications précédentes.
